# EUROPÄISCHE PATENTSCHRIFT

(11) **EP 2 783 164 B1**
(45) Veröffentlichungstag und Bekanntmachung des Hinweises auf die Patenterteilung: **03.02.2016**
(21) Anmeldenummer: 12790553.7
(22) Anmeldetag: 22.11.2012
(51) Int. Cl.: F24D 19/10, F24J 2/40, F24J 2/46, F16L 53/00

(54) **VERFAHREN ZUM BETRIEB EINER FLUIDLEITUNGSVORRICHTUNG**
PROCESS OF OPERATING A FLUID LINE SYSTEM
PROCÉDÉ D'OPÉRATION D'UN SYSTÈME DE CONDUITE DE FLUIDE

(30) Priorität: 23.11.2011 DE 102011119159
(43) Veröffentlichungstag der Anmeldung: 01.10.2014
(73) Patentinhaber: Robert Bosch GmbH, 70442 Stuttgart (DE)
(72) Erfinder: KOSOK, Juergen, 48565 Steinfurt (DE)
(86) Internationale Anmeldenummer: PCT/EP2012/073375
(87) Internationale Veröffentlichungsnummer: WO 2013/076203

(56) Entgegenhaltungen:
- EP-A1- 2 224 175
- EP-A2- 2 213 952
- DE-A1- 3 835 012
- DE-A1- 19 804 048
- DE-A1-102004 057 288

## Beschreibung

Die Erfindung betrifft ein Verfahren zum Betrieb einer Fluidleitungsvorrichtung nach Patentanspruch 1.

Aus dem Stand der Technik sind Solarthermiekreisläufe bekannt, die eine Fluidleitungsvorrichtung mit einem ersten Leitungsabschnitt in einem Warmbereich und einen damit verbundenen zweiten Leitungsabschnitt in einem Kaltbereich aufweisen. Der Warmbereich umfasst hierbei meist die Leitungsabschnitte innerhalb eines Gebäudes und der Kaltbereich die Leitungsabschnitte, welche im Außenbereich den Umwelteinflüssen ausgesetzt sind. Im ersten Leitungsabschnitt ist eine Pumpe zum Fördern von Fluid, insbesondere einem Wärmeträgermedium, angeordnet. Vor der Pumpe ist der erste Leitungsabschnitt mit einem Wärmespeicher thermisch gekoppelt. Um diesen Wärmespeicher mit solar gewonnener Wärme laden zu können, ist im zweiten Leitungsabschnitt ein Solarkollektor zur Erwärmung hindurchströmenden Fluids vorgesehen.

Zum Schutz vor Schäden durch ein Einfrieren des Fluids im zweiten Leitungsabschnitt, wird dieser bei tiefen Außentemperaturen und/oder bei einer Deaktivierung der Pumpe entleert. Realisiert wird dies entweder aktiv mit der Pumpe oder durch einen geodätisch höher angeordneten zweiten Abschnitt. Letzteres ist auch als Drain Back System [DBS] bekannt. Bei geschlossenen Fluidkreisläufen umfasst der erste Leitungsabschnitt hierfür, zum Beispiel in Förderrichtung des Fluids vor der Pumpe, einen Entleerungsbehälter zur Aufnahme des Fluids. Der Entleerungsbehälter kann dabei die Form eines zylindrischen oder ballonförmigen Tanks oder auch jede andere geeignete Form annehmen.

Offene Kreisläufe wie zum Beispiel bei einer Brunnenpumpe, wobei der Warmbereich hier das Brunnenloch und der Kaltbereich wiederum der Außenbereich ist, umfassen keinen derartigen Entleerungsbehälter. Der Rückstrom kann hier direkt von der Brunnenquelle aufgenommen werden.

Wenn der zweite Leitungsabschnitt zunächst entleert ist und bei tiefen Außentemperaturen gefüllt werden soll, z.B. zur Wasserentnahme aus einem Brunnen oder wenn der Solarkollektor solare Wärme gewinnen kann, friert das Fluid häufig im zweiten Leitungsabschnitt ein, wodurch es hier zu Schäden kommen kann. Problematisch und besonders häufig ist dies bei einem Fluid aus oder auf Basis von Wasser, da Wasser eine Dichteanomalie im Temperaturbereich von 0 °C bis 4 °C aufweist und sich in der gefrorenen festen Phase ausdehnt.

Im Einzelnen entsteht der Schaden wie folgt: Aufgrund der tiefen Temperaturen ist der zweite Leitungsabschnitt oftmals wenigstens annähernd auf das Temperaturniveau des Kaltbereichs abgekühlt. Auch durch solare Bestrahlung des Solarkollektors erwärmt sich meist nur dessen oberer Teil, da der typische Winterfall eine tief stehende Sonne und einen niedrigen Einfallswinkel der solaren Strahlung umfasst. Der Rest des zweiten Leitungsabschnitts bleibt auf dem Temperaturniveau des Kaltbereichs. Trotz der Gefahr eines Einfrierens des Fluids in diesem Abschnitt löst ein Temperatursensor des Solarkollektors im Zusammenspiel mit einer Regeleinheit im Stand der Technik ein Startsignal für die Pumpe aus, wenn diese Temperatur um eine Einschalt-Temperaturdifferenz höher ist als eine Speicher-Referenztemperatur. Auch eine Brunnenpumpe wird ohne Berücksichtigung des unterkühlten zweiten Leitungsabschnitts einfach aktiviert.

In der Folge wird der zweite Leitungsabschnitt mit dem Fluid gefüllt. An den unterkühlten Rohrleitungen friert das Fluid langsam ein und die Fließgeschwindigkeit des Fluids nimmt fortschreitend bis zum Stillstand ab. Oftmals sind dann bereits große Teile des zweiten Leitungsabschnitts mit Fluid gefüllt und werden durch dessen Einfrieren beschädigt. Besonders groß ist der Schaden, wenn auch Leitungen innerhalb des Solarkollektors einfrieren.

Aufgabe der Erfindung ist es daher, die Probleme des Standes der Technik zu beseitigen und ein Verfahren oder eine Vorrichtung bereitzustellen, welche Schäden durch einfrierendes Fluid an dem im Kaltbereich liegenden zweiten Leitungsabschnitt verhindern. Die Lösung soll einfach umsetz- und montierbar, sicher im Betrieb und nach Möglichkeit nachrüstbar sein, sowie wenig kosten.

Bei einem Verfahren zum Betrieb einer Fluidleitungsvorrichtung mit einem ersten Leitungsabschnitt in einem Warmbereich und einem damit verbundenem zweiten Leitungsabschnitt in einem Kaltbereich, wobei im ersten Leitungsabschnitt eine Pumpe zum Fördern von Fluid angeordnet ist, umfasst die Erfindung daher ein Aktivieren eines Pumpenanlaufprogramms beim Aktivieren der Pumpe, wobei das Pumpenanlaufprogramm folgende Schritte umfasst:
A) Vorgabe einer zu fördernden Fluidmenge;
B) Starten einer Fluideinleitungssequenz, beinhaltend die Förderung der vorgegebenen Fluidmenge vom ersten Leitungsabschnitt in den ungefüllten zweiten Leitungsabschnitt;
C) Starten einer Fluidrücklaufsequenz, beinhaltend ein Zurückströmen der in den zweiten Leitungsabschnitt eingeleiteten Fluidmenge in den ersten Leitungsabschnitt, sowie Bestimmen einer Rückstromtemperatur des zurückströmenden Fluids im ersten Leitungsabschnitt;
D) Erhöhen der Vorgabe der zu fördernden Fluidmenge und Durchführen einer der folgenden Unterschritte:
   d1) Wiederholen der Schritte A) bis D), wenn die Rückstromtemperatur des zurückströmenden Fluids größer oder gleich einer Rückstrom-Grenztemperatur und die erhöhte Vorgabe der zu fördernden Fluidmenge kleiner oder gleich einer Grenzmenge ist;
   d2) Deaktivieren des Pumpenanlaufprogramms und Aufnahme eines Normbetriebs der Pumpe, wenn die erhöhte Vorgabe der zu fördernden Fluidmenge größer ist als die Grenzmenge;
   d3) Deaktivieren des Pumpenanlaufprogramms, Deaktivieren der Pumpe und Zurücksetzen der Vorgabe der zu fördernden Fluidmenge, wenn die Rückstromtemperatur die Rückstrom-Grenztemperatur unterschreitet.

Hierdurch werden Frostschäden im zweiten Leitungsabschnitt wirksam vermieden, da rechtzeitig erkannt wird, ob eine Gefahr des Einfrierens besteht. Zudem erwärmt sich der zweite Leitungsabschnitt während des Pumpenanlaufprogramms, da das Fluid aus dem ersten Leitungsabschnitt im Warmbereich mit jeder Fluideinleitungssequenz Wärme an den zweiten Leitungsabschnitt abgibt, ohne jedoch einzufrieren. Entsprechend erhöhen sich die möglichen Betriebsstunden eines Solarkreislaufs pro Jahr. Durch beispielsweise einen Temperatursensor im Kaltbereich kann das Pumpenanlaufprogramm bei tiefen Kaltbereichstemperaturen aktiviert werden, da hier davon auszugehen ist, dass außen verlegte Leitungsabschnitte ebenfalls diese Kaltbereichstemperatur aufweisen.

Beim Aktivieren des Pumpenanlaufprogramms wird nicht sogleich ein vollständiger Füllvorgang des zweiten Leitungsabschnitts gestartet. Zunächst wird die Füllung gewissermaßen in Takten vollzogen, sodass der zweite Leitungsabschnitt bei jedem Takt weiter mit Fluid gefüllt wird. Nach jedem Takt strömt das eingeleitete Fluid aus dem zweiten Leitungsabschnitt zurück in den ersten Leitungsabschnitt und wird die Rückstromtemperatur des rückströmenden Fluids im ersten Leitungsabschnitt erfasst. Unterschreitet die Rückstromtemperatur die Rückstrom-Grenztemperatur, stoppt der fortschreitende Füllversuch durch das Pumpenanlaufprogramm.

Sofern die Temperatur im Solarkollektor während des Pumpenanlaufprogramms unter einen Grenzwert abfällt, kann das Pumpenanlaufprogramm beendet und die Pumpe komplett bis zu einer erneuten Aktivierung deaktiviert werden. Ein Füllen der Rohrleitung ist hier aufgrund der nicht erbringbaren Wärmegewinnung nicht mehr sinnvoll.

Damit keine Volumenstrommessung durchgeführt werden muss, ist es möglich, die zu fördernde Fluidmenge im Pumpenanlaufprogramm über Pumpeneinschaltzeiten zu definieren. Die Zurücksetzung der zu fördernden Fluidmenge gemäß Schritt D), Unterschritt d3) sollte bis auf den Ausgangswert erfolgen. Dies kann unmittelbar oder über einen Zeitraum gestreckt geschehen. Mit zunehmender Deaktivierungszeit der Pumpe nähert sich die zu fördernde Fluidmenge somit dem Ausgangswert an. Bei kurzer Deaktivierungszeit wird das Pumpenanlaufprogramm hierdurch abgekürzt. Nach längerer Deaktivierungszeit startet das Pumpenanlaufprogramm jedoch komplett von der Ausgangssituation.

Die Erfindung bezieht sich nahezu nur auf neue Funktionen einer Regeleinheit unter der Nutzung vorhandener Komponenten wodurch die Kosten zur Umsetzung des Verfahrens gering sind. Lediglich ein zusätzlicher Temperaturfühler zur Bestimmung der Rückstromtemperatur könnte notwendig sein, sofern der Solarkreislauf keinen Temperaturfühler in diesem Bereich aufweist. Idealerweise sollte dieser Temperaturfühler im Bereich der Grenze zwischen dem ersten Leitungsabschnitt und dem zweiten Leitungsabschnitt angeordnet sein. Auch die Umsetzung und Montage der erfindungsgemäßen Lehre gestaltet sich sehr einfach. Beispielsweise kann eine Regeleinheit einer bereits bestehenden Leitungsvorrichtung einfach mit einem Software-Update umprogrammiert werden. Auf diese Weise sind Produktänderungen in der Produktion und eine Nachrüstung bereits montierter Leitungsvorrichtungen besonders einfach und preiswert.

Eine Weiterbildung der Erfindung sieht vor, dass das Pumpenanlaufprogramm übersprungen und die Pumpe unmittelbar in einem Normbetrieb aktiviert wird, wenn eine Kaltbereichstemperatur im Kaltbereich während eines Messzeitraumes vor dem Aktivieren der Pumpe über einer Kaltbereich-Grenztemperatur lag. Somit kann unmittelbar Fluid in den zweiten Leitungsabschnitt gepumpt werden, da keine Gefahr eines Einfrierens besteht. Entsprechend entsteht keine Zeitverzögerung, bis das Fluid an seinem Bestimmungsort ankommt. So kann ein Solarkollektor sehr kurzfristig und schnell solare Wärme gewinnen. Vor allem bei heiter bis wolkigen Wetterbedingungen erhöht sich hierdurch die Betriebszeit und die gewonnene Wärme erheblich. Auch dies ist ausschließlich durch Programmierung der Regeleinheit und ohne Kosten für zusätzliche Bauteile umsetzbar.

In einer bevorzugten Ausgestaltung des Verfahrens ist der zweite Leitungsabschnitt geodätisch höher angeordnet als der erste Leitungsabschnitt. Dies ermöglicht ein passives Zurückströmen des Fluids vom zweiten in den ersten Leitungsabschnitt, ohne dass die Pumpe aktiv rückwärts pumpen muss. Hierdurch wird Antriebsenergie eingespart, der Rückstrom ist auch bei einer Unterbrechung der Stromzufuhr gesichert und der zweite Leitungsabschnitt kann sich vollständig entleeren. Hierfür sollte die Pumpe einen Rückstrom zulassen oder ein Bypass die Pumpe überbrücken. Ein im Bypass angeordnetes Ventil könnte dann bei der Deaktivierung der Pumpe und/oder einer Stromunterbrechung den Bypass freigeben, um einen Rückstrom zu ermöglichen.

Gemäß einer näheren Ausgestaltung des Verfahrens ist die Grenzmenge kleiner oder gleich dem Leitungsvolumen des zweiten Leitungsabschnitts. Entsprechend umfasst das Pumpenanlaufprogramm maximal die komplette Befüllung des zweiten Leitungsabschnitts. Wenn diese Befüllung einmal erreicht ist, kann die Pumpe in einen Normbetrieb geschaltet werden, da keine Einfriergefahr mehr besteht. Wenn ein Solarkollektor im zweiten Leitungsabschnitt angeordnet ist, kann das Pumpenanlaufprogramm bereits beendet werden, wenn die Rückstromtemperatur erstmals die vorangegangene Rückstromtemperatur übersteigt. In diesem Fall ist der vorderste Bereich des Fluids bereits erwärmt worden, insbesondere im Bereich des Solarkollektors. Entsprechend ist das Fluid in einem Bereich des Solarkollektors angelangt, in dem solare Wärme gewonnen wird. Auch eine Beschattung eines Teilbereichs des Solarkollektors wird so berücksichtigt.

Zur Durchführung des Verfahrens kann vorgesehen sein, dass der erste Leitungsabschnitt in Förderrichtung des Fluids vor der Pumpe einen Entleerungsbehälter zur Aufnahme von Fluid in der Fluidrücklaufsequenz umfasst. Dies ist insbesondere dann notwendig, wenn es sich um eine geschlossene Fluidleitungsvorrichtung handelt. Das rückströmende Fluid steht so bei einem erneuten Aktivieren der Pumpe wieder zur Verfügung. Außerdem weist es nach längerer Deaktivierungsphase wenigstens annährend die Temperatur des Warmbereichs auf, sodass es den zweiten Leitungsabschnitt im Pumpenanlaufprogramm erwärmen kann.

Besonders bevorzugt liegt der Entleerungsbehälter geodätisch tiefer als der zweite Leitungsabschnitt. Dies ermöglicht die vollständige Entleerung des zweiten Leitungsabschnitts in den Entleerungsbehälter, ohne dass es einer Aktivierung der Pumpe in einer Rückwärtsrichtung erfordert.

Vorzugsweise entleert sich auch der erste Leitungsabschnitt wenigstens nahezu bis zum Entleerungsbehälter, damit bei jeder Fluideinleitungssequenz möglichst warmes Fluid in den zweiten Leitungsabschnitt eingeleitet wird und diesen erwärmen kann. Optimal realisierbar ist dies durch ein Münden des Bypasses in den Entleerungsbehälter. Entsprechend sollte das andere Ende des Bypasses stromabwärts zur Pumpe und geodätisch höher als der Entleerungsbehälter mit dem ersten Leitungsabschnitt verbunden sein. Das kalte rückströmende Fluid kann so vollständig in den Entleerungsbehälter geführt werden und bei der nächsten Fluideinleitungssequenz mittels der Pumpe wärmeres Fluid aus dem Entleerungsbehälter entnommen werden.

Ein besonders wichtiger Anwendungsfall des Verfahrens umfasst dessen Einsatz in einer als Solarthermiekreislauf ausgebildeten Fluidleitungsvorrichtung, wobei ein Solarkollektor im zweiten Leitungsabschnitt angeordnet ist, und wobei der erste Leitungsabschnitt vor der Pumpe mit einem Wärmespeicher thermisch gekoppelt ist. Gerade bei Solarthermiekreisläufen erfolgt eine häufige Aktivierung auch bei winterlichen Wetterverhältnissen, da durch solare Strahlung trotz einer niedrigen Außentemperatur Wärme gewonnen werden kann. Außerdem sind Frostschäden an Solarkollektoren besonders kostspielig. Mit dem erfindungsgemäßen Verfahren können Solarthermiekreisläufe vor derartigen Schäden geschützt werden.

Der Wärmespeicher kann hierbei den Entleerungsbehälter ausbilden. Im Wärmespeicher schichtet sich das Fluid entsprechend seiner Wärme ein. Kaltes Fluid wird aus dem unteren Bereich entnommen und erwärmtes Fluid im oberen Bereich des Wärmespeichers eingebracht. Während des Pumpenbetriebs bildet sich ein Hohlraum im oberen Bereich des Wärmespeichers, in dem sich vorzugsweise das zuvor im zweiten Leitungsabschnitt befundene Gas, insbesondere Luft, sammelt.

Ferner ist in einer Fortbildung des Verfahrens vorgesehen, dass eine Freigabe zum Aktivieren der Pumpe erfolgt, wenn eine Kollektortemperatur im Solarkollektor um eine Mindestüberhöhung höher ist als eine Speichertemperatur im Wärmespeicher und höher ist als eine absolute Mindesttemperatur. Grundsätzlich ist eine Aktivierung hier sinnvoll, um solare Wärme gewinnen zu können. Fraglich ist nunmehr nur, ob ein Pumpenanlaufprogramm aktiviert werden sollte oder die Pumpe besser direkt in einen Normbetrieb schaltet. Dies wird anhand anderer Regelkriterien entschieden.

Weiterhin ist ein Deaktivieren der Pumpe sinnvoll, wenn die Kollektortemperatur geringer ist als die Speichertemperatur zuzüglich der Mindestüberhöhung oder geringer ist als die absolute Mindesttemperatur. Weitere Deaktivierungskriterien können in der Regeleinheit hinterlegt werden.

Um das Pumpenanlaufprogramm nicht direkt nach einer Deaktivierung erneut zu aktivieren, sieht eine spezielle Weiterbildung des Verfahrens vor, dass eine erneute Aktivierung der Pumpe nach einem Deaktivieren des Pumpenanlaufprogramms und einem gleichzeitigen Deaktivieren der Pumpe frühestens nach einer Verzögerungszeit erfolgt. Dieser Fall tritt insbesondere nach Verfahrensschritt D), Unterschritt d3) auf.

Bei einer sinnvollen Ergänzung des Verfahrens erfolgt eine Beheizung des zweiten Leitungsabschnitts, wenn das Pumpenanlaufprogramm gemäß Verfahrensschritt D), Unterschritt d3) deaktiviert wird, und die Beheizung wird deaktiviert, wenn die Pumpe in einen Normbetrieb schaltet oder die Beheizung eine Maximalzeit überschreitet. Somit wird nach einem abgebrochenen Füllversuch der zweite Leitungsabschnitt beheizt, um nach Möglichkeit bereits beim nächsten Füllversuch mittels des Pumpenanlaufprogramms die Pumpe in einen Normbetrieb schalten zu können. Die Heizleistung sollte hierbei auf die Verzögerungszeit abgestimmt sein. Sobald der Normbetrieb erreicht ist, wird die Beheizung beendet. Außerdem kann die Beheizung auch nach einer Maximalzeit beendet werden. Dies berücksichtigt, dass nach einem vorhergehenden Füllversuch beispielsweise doch keine Aktivierung der Pumpe mehr sinnvoll ist, so zum Beispiel bei einem Wetterumschwung.

Zur Realisierung der Beheizung sollte der zweite Leitungsabschnitt eine Heizvorrichtung aufweisen. Um die Materialkosten hierfür gering zu halten und die Verlegung von Kabeln möglichst einfach zu gestalten, kann die Heizvorrichtung von einem Kabel eines im Kaltbereich angeordneten Temperatursensors ausgebildet sein. Dieses Kabel ist ohnehin notwendig, um den Temperatursensor mit der Regeleinheit zu verbinden. Das Kabel kann somit gemeinsam mit dem zweiten Leitungsabschnitt verlegt werden und es sind keine zusätzlichen Kabel für die Heizvorrichtung notwendig. Bei der Beheizung fungiert das Kabel als elektrischer Widerstand. Geeignet sind hierfür vor allem Kabel mit Kupferadern. Um den Temperatursensor vor Schäden zu bewahren, kann dieser während der Beheizung elektrisch überbrückt werden. Die Überbrückung erfolgt bevorzugt an der Position, an welcher der zu beheizende Bereich des zweiten Leitungsabschnitts endet. Signale des Sensors können trotz des Stromflusses zur Beheizung durch die Adern geleitet werden, z.B. durch eine Parallelschaltung relativ zur Überbrückung.

Zusätzlich sollte der zweite Leitungsabschnitt hierbei eine Schleife und zwei gegenläufige Teilabschnitte ausbilden. Die gegenläufigen Teilabschnitte können dann von einer gemeinsamen thermischen Isolierung umgeben sein. Mit jedem der gegenläufigen Teilabschnitte wird dann bevorzugt eine Ader des Kabels des Temperatursensors thermisch gekoppelt. Das Kabel ist bzw. dessen Adern sind dann vorzugsweise in der thermischen Isolierung eingebettet. Die Montage gestaltet sich so besonders einfach, ist kostengünstig und das Kabel ist obendrein geschützt.

Die Zeichnungen stellen ein Ausführungsbeispiele der Erfindung dar und zeigen in
- Fig. 1: eine schematisch dargestellte und als Solarthermiekreislauf ausgebildete Fluidleitungsvorrichtung;
- Fig. 2: einen Querschnitt durch einen zweiten Leitungsabschnitt mit gegenläufigen Teilabschnitten mit gemeinsamer Isolierung und einer Heizvorrichtung; und
- Fig. 3: ein Diagramm des Pumpenanlaufverfahrens.

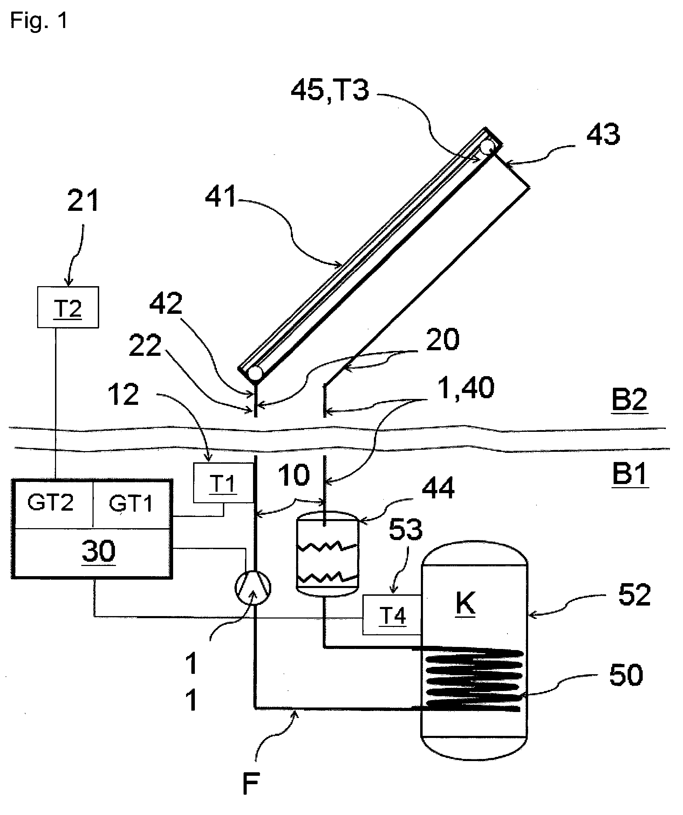

Fig. 1 zeigt eine schematisch dargestellte und als Solarthermiekreislauf 40 ausgebildete Fluidleitungsvorrichtung 1. Die Fluidleitungsvorrichtung 1 weist einen ersten Leitungsabschnitt 10 in einem Warmbereich B1 und einen damit verbundenen zweiten Leitungsabschnitt 20 in einem Kaltbereich B2 auf. Im ersten Leitungsabschnitt 10 ist eine Pumpe 11 zum Fördern von Fluid F angeordnet. Außerdem ist der erste Leitungsabschnitt 10 in Strömungsrichtung vor der Pumpe 11 über einen Wärmetauscher 50 mit einem Wärmespeicher 52 thermisch gekoppelt. Im zweiten Leitungsabschnitt 20 befindet sich ein Solarkollektor 41. In Strömungsrichtung der Pumpe 11 hinter dem Wärmetauscher 50 und vor dem Solarkollektor 41 ist die Fluidleitungsvorrichtung 1 somit ein Rücklauf 42. Umgekehrt ist die Fluidleitungsvorrichtung 1 in Strömungsrichtung der Pumpe 11 vor dem Wärmetauscher 50 und hinter dem Solarkollektor 41 ein Vorlauf 43.

Mit dieser Fluidleitungsvorrichtung 1 ist es nunmehr möglich mit der Pumpe 11 Fluid F im Kreis zu pumpen. Hierbei kann das Fluid im Solarkollektor 41 solare Wärme aufnehmen. Über den Wärmetauscher 50 kann das Fluid F anschließend Wärme an den Wärmespeicher abgeben. Im Wärmespeicher 52 befindet sich zum Speichern ein Wärmeträgermedium K.

Zur Realisierung einer Entleerung des zweiten Leitungsabschnitts 20 ist die Pumpe 11 in deaktiviertem Zustand rückwärts durchströmbar. Außerdem ist der zweite Leitungsabschnitt 20 geodätisch höher angeordnet als der erste Leitungsabschnitt 10 und der erste Leitungsabschnitt 10 umfasst in Förderrichtung des Fluids F vor der Pumpe 11 einen Entleerungsbehälter 44 zur Aufnahme des Fluids F in einer Fluidrücklaufsequenz S2. Dieser Entleerungsbehälter 44 ist geodätisch tiefer als der zweite Leitungsabschnitt 20 angeordnet.

Weiterhin zeigt Fig. 1 eine Regeleinheit 30. Diese ist mit vier Temperatursensoren verbunden. Mit einem ersten Temperatursensor 12 wird eine Rückstromtemperatur T1 stromabwärts zur Pumpe 11 im ersten Leitungsabschnitt 10 bestimmt. Die Bestimmung erfolgt insbesondere an der Grenze zum zweiten Leitungsabschnitt 20. Ein zweiter Temperatursensor 21 ist im Kaltbereich B2 angeordnet und ermöglicht die Bestimmung einer Kaltbereichstemperatur T2. Ein dritter Temperatursensor 45 findet sich im Solarkollektor 41, insbesondere in dessen oberen Bereich, wobei der Solarkollektor 41 eine aufgestellte sonnenexponierte Ausrichtung aufweist. Der dritte Temperatursensor 45 ist ein Kollektor-Temperatursensor 45, welcher eine Bestimmung der Kollektortemperatur T3 erlaubt. Durch die Anordnung im oberen Bereich wird die Bestimmung der höchsten Kollektortemperatur T3 ermöglicht, z.B. auch bei Teilbeschattung des unteren Bereichs. Schließlich ist auch noch ein vierter Temperatursensor 53 zur Bestimmung der Speichertemperatur T4 an dem Wärmespeicher 52 vorgesehen.

Mit dieser Vorrichtung ist nunmehr ein Verfahren durchführbar, das ein Aktivieren eines Pumpenanlaufprogramms P beim Aktivieren der Pumpe 11 umfasst, wobei das Pumpenanlaufprogramm P folgende Schritte umfasst:
A) Vorgabe einer zu fördernden Fluidmenge;
B) Starten einer Fluideinleitungssequenz S1, beinhaltend die Förderung der vorgegebenen Fluidmenge vom ersten Leitungsabschnitt 10 in den ungefüllten zweiten Leitungsabschnitt 20;
C) Starten einer Fluidrücklaufsequenz S2 beinhaltend, ein Zurückströmen der in den zweiten Leitungsabschnitt 20 eingeleiteten Fluidmenge in den ersten Leitungsabschnitt 10, sowie Bestimmen der Rückstromtemperatur T1 des zurückströmenden Fluids F im ersten Leitungsabschnitt 10;
D) Erhöhen der Vorgabe der zu fördernden Fluidmenge und Durchführen einer der folgenden Unterschritte:
   d1) Wiederholen der Schritte A) bis D), wenn die Rückstromtemperatur T1 des zurückströmenden Fluids F größer oder gleich einer Rückstrom-Grenztemperatur GT1 und die erhöhte Vorgabe der zu fördernden Fluidmenge kleiner oder gleich einer Grenzmenge ist;
   d2) Deaktivieren des Pumpenanlaufprogramms P und Aufnahme eines Normbetriebs der Pumpe 11, wenn die erhöhte Vorgabe der zu fördernden Fluidmenge größer ist als die Grenzmenge;
   d3) Deaktivieren des Pumpenanlaufprogramms P, Deaktivieren der Pumpe 11 und Zurücksetzung der Vorgabe der zu fördernden Fluidmenge, wenn die Rückstromtemperatur T1 die Rückstrom-Grenztemperatur GT1 unterschreitet.

Die erste Grenztemperatur GT1 ist hierfür in der Regeleinheit 30 hinterlegbar. Somit kann die erste Grenztemperatur GT1 auch an verschiedene Fluidleitungsvorrichtungen 1 angepasst werden. Ferner wird die Grenzmenge kleiner oder gleich dem Leitungsvolumen des zweiten Leitungsabschnitts 20 gewählt.

Das Pumpenanlaufprogramm P wird übersprungen und die Pumpe 11 unmittelbar in einem Normbetrieb aktiviert, wenn die Kaltbereichstemperatur T2 im Kaltbereich B2 während eines Messzeitraumes x vor dem Aktivieren der Pumpe 11 über einer Kaltbereich-Grenztemperatur GT2 lag. Auch diese Kaltbereich-Grenztemperatur GT2 ist in der Regeleinheit 30 hinterlegt, bzw. hinterlegbar.

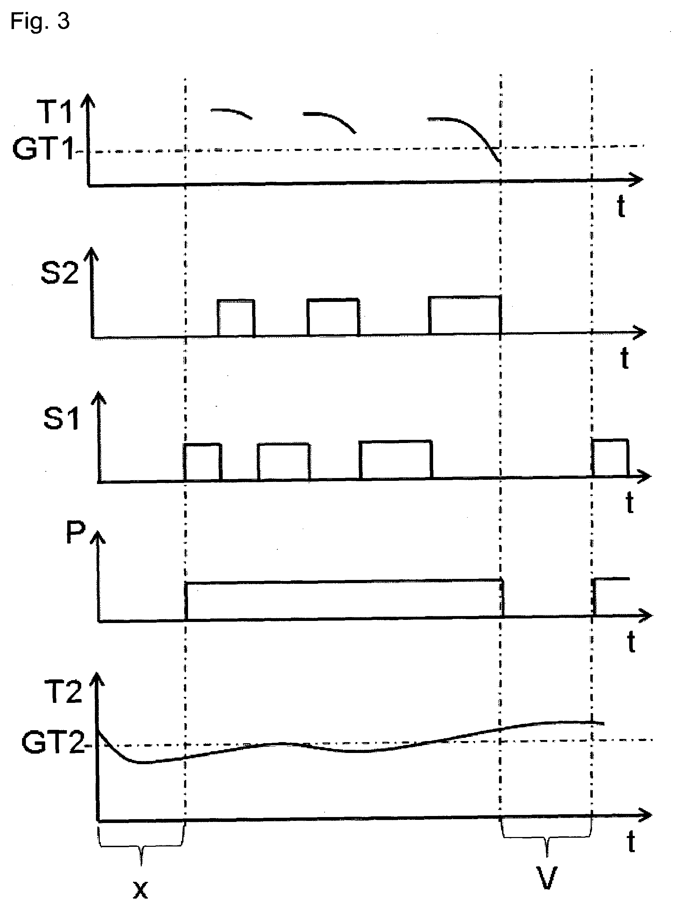

Wie in Fig. 3 zu erkennen ist, unterschreitet die Kaltbereichstemperatur T2 im Kaltbereich B2 während des Messzeitraumes x die Kaltbereich-Grenztemperatur GT2. Folglich wird zunächst ein Pumpenanlaufprogramm P aktiviert. Es ist weiterhin erkennbar, dass während des Pumpenanlaufprogramms P zwischen Fluideinleitungssequenzen S1 und Fluidrücklaufsequenzen S2 abgewechselt wird. Über die zeitliche Dauer der Sequenzen S1, S2 wird dabei die Fluidmenge vorgegeben, welche in den zweiten Leitungsabschnitt 20 gefördert wird und anschließend wieder zurückströmt. Die Rückstromtemperatur T1 wird nur während der Fluidrücklaufsequenzen S2 bestimmt. Man erkennt, dass das Fluid F am Ende der jeweiligen Fluidrücklaufsequenz S2 am niedrigsten temperiert ist. Dies resultiert aus der längeren Aufenthaltsdauer im Kaltbereich B2 des als erstes in den zweiten Leitungsabschnitt 20 eingeleiteten Fluids F. Bei der dritten Fluidrücklaufsequenz S2 fällt die Rückstromtemperatur T1 schließlich unter eine erste Grenztemperatur GT1. Dies löst Verfahrensschritt D), Unterschritt d3) aus, bei welchem ein Deaktivieren des Pumpenanlaufprogramms P, ein Deaktivieren der Pumpe 11 und ein Zurücksetzen der Vorgabe der zu fördernden Fluidmenge erfolgt.

Grundsätzlich erfolgt eine Freigabe zum Aktivieren der Pumpe 11 nur, wenn die Kollektortemperatur T3 im Solarkollektor 41 um eine Mindestüberhöhung höher ist als die Speichertemperatur T4 im Wärmespeicher 52 und höher ist als eine absolute Mindesttemperatur. Außerdem wird die Pumpe 11 deaktiviert, wenn die Kollektortemperatur T3 geringer ist als die Speichertemperatur T4 zuzüglich der Mindestüberhöhung oder geringer ist als die absolute Mindesttemperatur.

Wie weiterhin aus Fig. 3 hervorgeht, erfolgt eine erneute Aktivierung der Pumpe 11 nach einem Deaktivieren des Pumpenanlaufprogramms P und einem gleichzeitigen Deaktivieren der Pumpe 11 nach einer Verzögerungszeit V. Das Pumpenanlaufprogram P startet dann erneut mit einer Fluideinleitungssequenz S1.

Zur Unterstützung des Verfahrens wird eine Beheizung des zweiten Leitungsabschnitts 20 aktiviert, wenn das Pumpenanlaufprogramm P gemäß Schritt D), Unterschritt d3) deaktiviert wird. Die Beheizung wird erst wieder deaktiviert, wenn die Pumpe 11 in einen Normbetrieb schaltet oder die Beheizung eine Maximalzeit überschreitet.

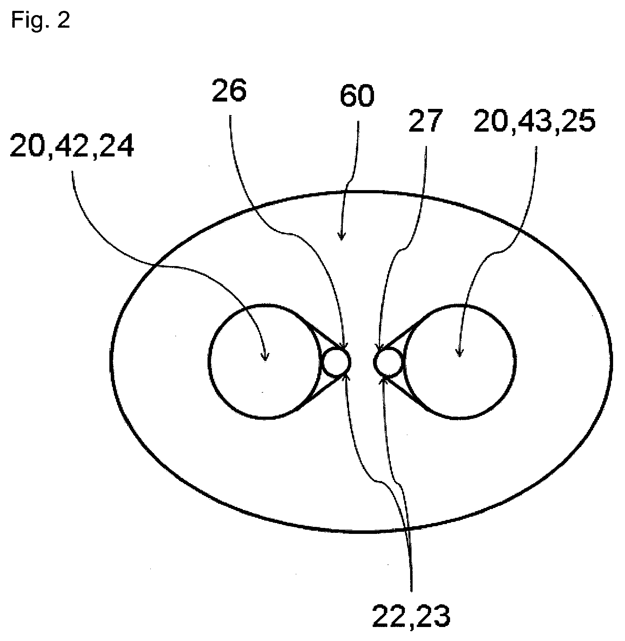

Gemäß der Fig. 1 und 2 weist der zweite Leitungsabschnitt 20 hierfür eine Heizvorrichtung 22 auf. Aus Fig. 2 geht deren genauer Aufbau hervor. Die Heizvorrichtung 22 wird von einem Kabel 23 des im Kaltbereich B2 angeordneten Temperatursensors 21 ausgebildet. Der zweite Leitungsabschnitt 20 bildet eine Schleife und zwei gegenläufige Teilabschnitte 24, 25 aus, wobei der erste Teilabschnitt 24 im Rücklauf 42 und der zweite Teilabschnitt 25 im Vorlauf 43 angeordnet sind. Die gegenläufigen Teilabschnitte 24, 25 haben eine gemeinsame thermische Isolierung 60. Von dieser werden sie radial eingefasst. Jeder der gegenläufigen Teilabschnitte 24, 25 ist jeweils mit einer Ader 26, 27 des Kabels 23 des Temperatursensors 21 thermisch gekoppelt. Insbesondere ist die erste Ader 26 mit dem ersten Teilabschnitt 24 und die zweite Ader 27 mit dem zweiten Teilabschnitt 25 thermisch gekoppelt. Die thermische Kopplung erfolgt dabei jeweils durch benachbarte und aneinandergrenzende Anordnung der Teilabschnitte 24, 25 und der Adern 26, 27. Auch das Kabel 23, insbesondere dessen Adern 26, 27, ist/sind mit in die thermische Isolierung (60) eingebettet.

**BEZUGSZEICHENLISTE**

| | | | |
|---|---|---|---|
| 1 | Fluidleitungsvorrichtung | 60 | thermische Isolierung |
| | | | |
| 10 | erster Leitungsabschnitt | B1 | Warmbereich |
| 11 | Pumpe | B2 | Kaltbereich |
| 12 | Rückstrom-Temperatursensor | F | Fluid |
| | | | |
| 20 | zweiter Leitungsabschnitt | G1 | Fördermengengeber |
| 21 | Temperatursensor (Kaltbereich) | G2 | Rückholmengengeber |
| 22 | Heizvorrichtung | | |
| 23 | Kabel | GT1 | erste Grenztemperatur |
| 24 | erster Teilabschnitt | GT2 | Kaltbereich-Grenztemperatur |
| 25 | zweiter Teilabschnitt | | |
| 26 | erste Ader | H | Mindestüberhöhung |
| 27 | zweite Ader | M | Fluidmenge |
| | | P | Pumpenanlaufprogramm |
| 30 | Regeleinheit | S1 | Fluideinleitungssequenz |
| | | S2 | Fluidrücklaufsequenz |
| 40 | Solarthermiekreislauf | | |
| 41 | Solarkollektor | t | Zeit |
| 42 | Rücklauf | T1 | Rückstromtemperatur |
| 43 | Vorlauf | T2 | Kaltbereichstemperatur |
| 44 | Entleerungsbehälter | T3 | Kollektortemperatur |
| 45 | Kollektor-Temperatursensor | T4 | Speichertemperatur |
| | | | |
| 50 | Wärmetauscher | V | Verzögerungszeit |
| 51 | Teilbereich des Wärmetauschers | x | Messzeitraum |
| 52 | Wärmespeicher | | |
| 53 | Speicher-Temperatursensor | | |

## Patentansprüche

1. Verfahren zum Betrieb einer Fluidleitungsvorrichtung (1) mit einem ersten Leitungsabschnitt (10) in einem Warmbereich (B1) und einem damit verbundenen zweiten Leitungsabschnitt (20) in einem Kaltbereich (B2), wobei im ersten Leitungsabschnitt (10) eine Pumpe (11) zum Fördern von Fluid (F) angeordnet ist, umfassend ein Aktivieren eines Pumpenanlaufprogramms (P) beim Aktivieren der Pumpe (11), wobei das Pumpenanlaufprogramm (P) folgende Schritte umfasst:
A) Vorgabe einer zu fördernden Fluidmenge;
B) Starten einer Fluideinleitungssequenz (S1), beinhaltend die Förderung der vorgegebenen Fluidmenge vom ersten Leitungsabschnitt (10) in den ungefüllten zweiten Leitungsabschnitt (20);
C) Starten einer Fluidrücklaufsequenz (S2), beinhaltend ein Zurückströmen der in den zweiten Leitungsabschnitt (20) eingeleiteten Fluidmenge in den ersten Leitungsabschnitt (10), sowie Bestimmen einer Rückstromtemperatur (T1) des zurückströmenden Fluids (F) im ersten Leitungsabschnitt (10);
D) Erhöhen der Vorgabe der zu fördernden Fluidmenge und Durchführen einer der folgenden Unterschritte:
d1) Wiederholen der Schritte A) bis D), wenn die Rückstromtemperatur (T1) des zurückströmenden Fluids (F) größer oder gleich einer Rückstrom-Grenztemperatur (GT1) und die erhöhte Vorgabe der zu fördernden Fluidmenge kleiner oder gleich einer Grenzmenge ist;
d2) Deaktivieren des Pumpenanlaufprogramms (P) und Aufnahme eines Normbetriebs der Pumpe (11), wenn die erhöhte Vorgabe der zu fördernden Fluidmenge größer ist als die Grenzmenge;
d3) Deaktivieren des Pumpenanlaufprogramms (P), Deaktivieren der Pumpe (11) und Zurücksetzen der Vorgabe der zu fördernden Fluidmenge, wenn die Rückstromtemperatur (T1) die Rückstrom-Grenztemperatur (GT1) unterschreitet.

2. Verfahren nach Anspruch 1,
**dadurch gekennzeichnet, dass** das Pumpenanlaufprogramm (P) übersprungen und die Pumpe (11) unmittelbar in einem Normbetrieb aktiviert wird, wenn eine Kaltbereichstemperatur (T2) im Kaltbereich (B2) während eines Messzeitraumes (x) vor dem Aktivieren der Pumpe (11) über einer Kaltbereich-Grenztemperatur (GT2) lag.

3. Verfahren nach einem der vorhergehenden Ansprüche,
**dadurch gekennzeichnet, dass** der zweite Leitungsabschnitt (20) geodätisch höher angeordnet ist als der erste Leitungsabschnitt (10).

4. Verfahren nach einem der vorhergehenden Ansprüche,
**dadurch gekennzeichnet, dass** die Grenzmenge kleiner oder gleich dem Leitungsvolumen des zweiten Leitungsabschnitts (20) ist.

5. Verfahren nach einem der vorhergehenden Ansprüche,
**dadurch gekennzeichnet, dass** der erste Leitungsabschnitt (10) in Förderrichtung des Fluids (F) vor der Pumpe (11) einen Entleerungsbehälter (44) zur Aufnahme von Fluid (F) in der Fluidrücklaufsequenz (S2) umfasst.

6. Verfahren nach Anspruch 5,
**dadurch gekennzeichnet, dass** der Entleerungsbehälter (44) geodätisch tiefer als der zweite Leitungsabschnitt (20) angeordnet ist.

7. Verfahren nach einem der vorhergehenden Ansprüche,
**dadurch gekennzeichnet, dass** die Fluidleitungsvorrichtung (1) ein Solarthermiekreislauf (40) ist, wobei ein Solarkollektor (41) im zweiten Leitungsabschnitt (20) angeordnet ist, und wobei der erste Leitungsabschnitt (10) mit einem Wärmespeicher (52) thermisch gekoppelt ist.

8. Verfahren nach Anspruch 7, umfassend den folgenden Schritt:
Freigabe zum Aktivieren der Pumpe (11), wenn eine Kollektortemperatur (T3) im Solarkollektor (41) um eine Mindestüberhöhung höher ist als eine Speichertemperatur (T4) im Wärmespeicher (52) und höher ist als eine absolute Mindesttemperatur.

9. Verfahren nach einem der vorhergehenden Ansprüche,
**dadurch gekennzeichnet, dass** eine erneute Aktivierung der Pumpe (11) nach einem Deaktivieren des Pumpenanlaufprogramms (P) und einem gleichzeitigen Deaktivieren der Pumpe (11) frühestens nach einer Verzögerungszeit (V) erfolgt.

10. Verfahren nach einem der vorhergehenden Ansprüche,
**dadurch gekennzeichnet, dass** eine Beheizung des zweiten Leitungsabschnitts (20) aktiviert wird, wenn das Pumpenanlaufprogramm (P) gemäß Schritt D), Unterschritt d3) deaktiviert wird, und dass die Beheizung deaktiviert wird, wenn die Pumpe (11) in einen Normbetrieb schaltet oder die Beheizung eine Maximalzeit überschreitet.

11. Verfahren nach Anspruch 10,
**dadurch gekennzeichnet, dass** der zweite Leitungsabschnitt (20) eine Heizvorrichtung (22) aufweist.

12. Verfahren nach Anspruch 11,
**dadurch gekennzeichnet, dass** die Heizvorrichtung (22) von einem Kabel (23) eines im Kaltbereich (B2) angeordneten Temperatursensors (21) ausgebildet ist.

## Claims

1. Method for operating a fluid line device (1) having a first line section (10) in a warm region (B1) and a second line section (20), connected thereto, in a cold region (B2), wherein in the first line section (10) a pump (11) for conveying fluid (F) is arranged, comprising activation of a pump start-up program (P) when the pump (11) is activated, wherein the pump start-up program (P) comprises the following steps:
A) predefining a fluid quantity to be conveyed;
B) starting a fluid introduction sequence (S1), including conveying the predefined fluid quantity from the first line section (10) into the unfilled second line section (20);
C) starting a fluid return-flow sequence (S2), including flowing back of the fluid quantity introduced into the second line section (20) into the first line section (10), and determining a return flow temperature (T1) of the flowing-back fluid (F) in the first line section (10);
D) increasing the predefinition of the fluid quantity to be conveyed, and carrying out one of the following substeps;
d1) repeating the steps A) to D) if the return flow temperature (T1) of the flowing-back fluid (F) is higher than or equal to a return flow limiting temperature (GT1), and the increased predefinition of the fluid quantity to be conveyed is less than or equal to a limiting quantity;
d2) deactivating the pump start-up program (P) and commencing normal operation of the pump (11) if the increased predefinition of the fluid quantity to be conveyed is larger than the limiting quantity;
d3) deactivating the pump start-up program (P), deactivating the pump (11) and resetting the predefinition of the fluid quantity to be conveyed, if the return flow temperature (T1) undershoots the return flow limiting temperature (GT1).

2. Method according to Claim 1,
**characterized in that** the pump start-up program (P) is bypassed and the pump (11) is activated directly in a normal operating mode if, during a measuring period (x), a cold region temperature (T2) in the cold region (B2) was above a cold region limiting temperature (GT2) before the activation of the pump (11).

3. Method according to one of the preceding claims,
**characterized in that** the second line section (20) is arranged geodetically higher than the first line section (10).

4. Method according to one of the preceding claims,
**characterized in that** the limiting quantity is less than or equal to the line volume of the second line section (20).

5. Method according to one of the preceding claims,
**characterized in that** the first line section (10) in the conveying direction of the fluid (F) upstream of the pump (11) comprises an emptying container (44) for holding fluid (F) in the fluid return-flow sequence (S2).

6. Method according to Claim 5,
**characterized in that** the emptying container (44) is arranged geodetically lower than the second line section (20).

7. Method according to one of the preceding claims,
**characterized in that** the fluid line device (1) is a solar thermal circuit (40), wherein a solar collector (41) is arranged in the second line section (20), and wherein the first line section (10) is thermally coupled to a heat accumulator (52).

8. Method according to Claim 7, comprising the following step:
enabling of the activation of the pump (11) if a collector temperature (T3) in the solar collector (41) is higher by a minimum elevation than a storage temperature (T4) in the heat accumulator (52) and higher than an absolute minimum temperature.

9. Method according to one of the preceding claims,
**characterized in that** renewed activation of the pump (11) takes place after deactivation of the pump start-up program (P) and a simultaneous deactivation of the pump (11), at the earliest after a delay (V).

10. Method according to one of the preceding claims,
**characterized in that** heating of the second line section (20) is activated if the pump start-up program (P) is deactivated in accordance with step D), substep d3), and **in that** the heating is deactivated if the pump (11) switches to a normal operating mode or the heating exceeds a maximum time.

11. Method according to Claim 10,
**characterized in that** the second line section (20) has a heating device (22).

12. Method according to Claim 11,
**characterized in that** the heating device (22) is formed by a cable (23) of a temperature sensor (21) which is arranged in the cold region (B2).

## Revendications

1. Procédé de fonctionnement d'un dispositif de conduite de fluide (1) comprenant une première section de conduite (10) dans une région chaude, (B1) et une deuxième section de conduite (20) connectée à celle-ci dans une région froide (B2), une pompe (11) pour refouler du fluide (F) étant disposée dans la première section de conduite (10), comprenant l'activation d'un programme de démarrage de pompe (P) lors de l'activation de la pompe (11), le programme de démarrage de la pompe (P) comprenant les étapes suivantes :
A) prescription d'une quantité de fluide à refouler ;
B) démarrage d'une séquence d'introduction de fluide (S1), contenant le refoulement de la quantité de fluide prescrite depuis la première section de conduite (10) dans la deuxième section de conduite non remplie (20) ;
C) démarrage d'une séquence de retour de fluide (S2), contenant un reflux de la quantité de fluide introduite dans la deuxième section de conduite (20) dans la première section de conduite (10), ainsi que la détermination d'une température de reflux (T1) du fluide refluant (F) dans la première section de conduite (10) ;
D) augmentation de la prescription de la quantité de fluide à refouler et mise en oeuvre d'une des étapes secondaires suivantes .
d1) répétition des étapes A) à D) si la température de reflux (T1) du fluide refluant (F) est supérieure ou égale à une température limite de reflux (GT1) et si la prescription accrue de la quantité de fluide à refouler est inférieure ou égale à une quantité limite ;
d2) désactivation du programme de démarrage de la pompe (P) et enregistrement d'un fonctionnement normal de la pompe (11) si la prescription accrue de la quantité de fluide refoulé est supérieure à la quantité limite ;
d3) désactivation du programme de démarrage de la pompe (P), désactivation de la pompe (11) et remise à zéro de la prescription de la quantité de fluide à refouler si la température de reflux (T1) est en dessous de la température limite de reflux (GT1).

2. Procédé selon la revendication 1,
**caractérisé en ce que** le programme de démarrage de la pompe (P) est contourné et la pompe (11) est activée directement dans un mode normal si une température de la région froide (T2) dans la région froide (B2) pendant un intervalle de mesure (X) avant l'activation, de la pompe (11) était supérieure à une température limite de la région froide (GT2).

3. Procédé selon l'une quelconque des revendications précédentes,
**caractérisé en ce que** la deuxième section de conduite (20) est disposée géodésiquement plus haut que la première section de conduite (10).

4. Procédé selon l'une quelconque des revendications précédentes,
**caractérisé en ce que** la quantité limite est inférieure ou égale au volume de conduite de la deuxième section de conduite (20).

5. Procédé selon l'une quelconque des revendications précédentes,
**caractérisé en ce que** la première section de conduite (10), dans la direction de refoulement du fluide (F) avant la pompe (11) comprend un récipient de vidange (44) pour recevoir du fluide (F) dans la séquence de reflux de fluide (S2).

6. Procédé selon la revendication 5,
**caractérisé en ce que** le récipient de vidange (44) est disposé géodésiquement plus bas que la deuxième section de conduite (20).

7. Procédé selon l'une quelconque des revendications précédentes,
**caractérisé en ce que** le dispositif de conduite de fluide (1) est un circuit d'énergie solaire thermique (40), un collecteur solaire (41) étant disposé dans la deuxième section de conduite (20), et la première section de conduite (10) étant accouplée thermiquement à un accumulateur de chaleur (52).

8. Procédé selon la revendication 7, comprenant les étapes suivantes :
libération en vue de l'activation de la pompe (11), lorsqu'une température du collecteur (T3) dans le collecteur solaire (41) est supérieure d'une augmentation minimale à une température d'accumulateur (T4) dans l'accumulateur de chaleur (52) et est supérieure à une température minimale absolue.

9. Procédé selon l'une quelconque des revendications précédentes,
**caractérisé en ce qu'**une activation renouvelée de la pompe (11) après une désactivation du programme de démarrage de la pompe (P) et une désactivation simultanée de la pompe (11) s'effectue au plus tôt après un temps de retard (V).

10. Procédé selon l'une quelconque des revendications précédentes,
**caractérisé en ce qu'**un chauffage de la deuxième section de conduite (20) est activé lorsque le programme de démarrage de la pompe (P) selon l'étape D), sous-étape d3) est désactivé, et **en ce que** le chauffage est désactivé lorsque la pompe (11) commute dans un mode normal ou lorsque le chauffage dépasse un temps maximal.

11. Procédé selon la revendication 10,
**caractérisé en ce que** la deuxième section de conduite (20) présente un dispositif de chauffage (22).

12. Procédé selon la revendication 11,
**caractérisé en ce que** le dispositif de chauffage (22) est réalisé par un câble (23) d'un capteur de température (21) disposé dans la région froide (B2).
